(19) **Europäisches Patentamt / European Patent Office / Office européen des brevets**

(11) **EP 2 980 377 B1**

(12) **EUROPEAN PATENT SPECIFICATION**

(45) Date of publication and mention
of the grant of the patent:
**23.08.2017 Bulletin 2017/34**

(21) Application number: **15177733.1**

(22) Date of filing: **21.07.2015**

(51) Int Cl.:
*F01N 3/08* $^{(2006.01)}$     *F01N 9/00* $^{(2006.01)}$
*F01N 11/00* $^{(2006.01)}$

(54) **EXHAUST GAS PURIFICATION APPARATUS FOR INTERNAL COMBUSTION ENGINE**

ABGASREINIGUNGSVORRICHTUNG FÜR EINEN VERBRENNUNGSMOTOR

APPAREIL DE PURIFICATION DE GAZ D'ÉCHAPPEMENT POUR MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.08.2014 JP 2014157890**

(43) Date of publication of application:
**03.02.2016 Bulletin 2016/05**

(73) Proprietor: **Toyota Jidosha Kabushiki Kaisha Toyota-shi, Aichi-ken 471-8571 (JP)**

(72) Inventor: **MORI, Toshihiro Aichi-Ken, 471-8571 (JP)**

(74) Representative: **J A Kemp 14 South Square Gray's Inn London WC1R 5JJ (GB)**

(56) References cited:
**EP-A1- 1 365 130**     **WO-A1-01/51779**
**GB-A- 2 495 750**

## Description

Technical Field

The present invention relates to an exhaust gas purification apparatus for an internal combustion engine.

Background Art

Engine systems are known wherein a NOx storage reduction catalyst (hereinafter referred to as "NSR catalyst") and a particulate filter (hereinafter referred to as "filter") are provided in an exhaust gas passage of an internal combustion engine, and, in a predetermined engine operational state, a filter regeneration operation decreasing a PM accumulation amount of the filter and a sulfur poisoning recovery operation recovering the NSR catalyst from the sulfur poisoning are performed continuously and by turns (see, for example, Patent Document 1).

Here, the regeneration of the filter is performed by raising the temperature of the filter. In this situation, the temperature of the NSR catalyst is also raised. Recovering the NSR catalyst from the sulfur poisoning also needs the temperature of the NSR catalyst to be raised. Hence, performing the sulfur poisoning recovery control for the NSR catalyst around the same time as the regeneration of the filter can decrease the amount of fuel required to raise the temperature of the NSR catalyst. This enables the deterioration of the fuel efficiency to be restricted.

In the meantime, the NOx purification rate of the NSR catalyst is changed depending on the amount of the sulfur component stored (occluded) in the NSR catalyst (hereinafter referred to as "sulfur poisoning amount" as well). In order to maintain a high NOx purification rate, it is appropriate that the sulfur poisoning amount of the NSR catalyst is small. However, the fuel is consumed in order to make the recovery from the sulfur poisoning. Therefore, when the sulfur poisoning recovery control is unnecessarily performed, it is feared that the fuel efficiency may be deteriorated. Note that the NOx purification rate is the ratio of the decrease amount of the NOx concentration by the NSR catalyst to the NOx concentration in the exhaust gas flowing into the NSR catalyst. Also in this case, the NOx concentration can be replaced with the NOx amount.

Prior Art Documents

   Patent Document 1: JP2010-127179A;
   Patent Document 2: JP2006-029249A;
   Patent Document 3: JP2000-080914A.

EP 1 365 130 A describes that removal of poisoning substance (sulfur oxidant) is controlled based upon estimating an amount of the poisoning substance deposited in an exhaust gas purification catalyst disposed in an exhaust pipe for an internal combustion engine, a lower limit is set corresponding to a possible removal amount of the poisoning substance varying with a state of a catalyst, and the removal control of the poisoning substance is ended when the estimated amount is less than the lower limit. The estimated amount can be accurately calculated, thereby ending the removal control at a proper timing. Fuel economy and exhaust gas purification performance improves.

WO 01/51779 A relates to a method and a device for the control of a desulphurisation of an NOX storage catalyst, arranged in an exhaust system of an internal combustion engine, with at least one NOx probe arranged downstream of the NOx storage catalyst, which produces a signal dependent upon the concentration of NOx present in the exhaust gas. An NOx activity for the NOx storage catalyst is determined, from the value of the NOx concentration measured downstream from the NOx storage catalyst. Should the NOx activity for the NOx storage catalyst fall below a preset threshold value, a desulphurisation with preset desulphurisation parameters is initiated. An irreversible deterioration of the NOx storage catalyst is determined by means of the desulphurisation success and, if a preset threshold value for deterioration is exceeded, a hard desulphurisation is initiated, whereby at least one desulphurisation parameter corresponding to an elevated desulphurisation efficiency is selected. The further operating parameters of the internal combustion engine are made dependent upon the NOx initial activity achieved after the hard desulphurisation.

GB 2495750 A describes a method for operating a lean nitrogen oxide trap located in an exhaust system of a diesel internal combustion engine equipped with an electronic control unit. The method comprises the steps of monitoring a value of a quantity of sulphur oxides accumulated in the lean NOx trap, preferably by use of an estimation model, requesting a DeSOx regeneration phase of the lean NOx trap if the value of the accumulated sulphur oxides quantity exceeds a predetermined threshold value thereof, evaluating a condition of non-compliance of the DeS0x regeneration phase of the lean NOx trap, such as checking if a value of an engine operating parameter is outside a predetermined range, and inhibiting the DeS0x regeneration phase of the lean NOx trap, if the condition of non-compliance is met.

Summary of the Invention

Problem to be solved by the invention

The present invention has been made taking the foregoing problem into consideration, an object of which is to suppress a NOx storage-reduction catalyst from being unnecessarily recovered from sulfur poisoning.

Means for solving the problem

In order to achieve the object as described above, the present invention comprises an exhaust gas purification apparatus as defined in appended claim 1.

The threshold value is the value that is smaller than the predetermined amount. That is, when the sulfur poisoning recovery control is performed, the sulfur poisoning amount becomes smaller than the predetermined amount. Further, the smaller the sulfur poisoning amount upon the start of the sulfur poisoning recovery control is, the larger the threshold value for judging the termination is. Hence, the sulfur poisoning recovery control is terminated in such a state that the smaller the sulfur poisoning amount upon the start of the sulfur poisoning recovery control is, the larger the sulfur poisoning amount is. Therefore, the average value of the sulfur poisoning amount that is increased due to the sulfur poisoning (i.e., the sulfur poisoning amount upon the start of the sulfur poisoning recovery control) and the sulfur poisoning amount decreased by performing the sulfur poisoning recovery control (i.e., the sulfur poisoning amount upon the termination of the sulfur poisoning recovery control) becomes relatively large. When the sulfur poisoning recovery control is performed until the sulfur poisoning amount is lowered to a certain value irrelevant to the sulfur poisoning amount upon the start of the sulfur poisoning recovery control, the sulfur poisoning amount when the sulfur poisoning recovery control is terminated is always relatively small. Therefore, the average value of the sulfur poisoning amounts is small as well. In such a situation, it is feared that a high purification rate may be maintained as compared with the required NOx purification rate. That is, although the NOx purification rate is raised, it is feared that the fuel efficiency may be deteriorated on account of the fact that the sulfur poisoning recovery control is unnecessarily continued. On the contrary, by increasing the threshold value of the sulfur poisoning recovery control as the amount of the sulfur component stored in the NOx storage reduction catalyst upon the start of the sulfur poisoning recovery control is smaller, although the NOx purification rate is lowered, the required NOx purification rate can be satisfied, and moreover the fuel efficiency can be improved.

Further, the predetermined amount referred to herein is set so that the NOx purification rate during the period in which the sulfur poisoning amount is increased/decreased on account of the accumulation of the sulfur component and the recovery from the sulfur poisoning, is within a permissible range. For example, the predetermined amount may be set so that the instantaneous value of the NOx purification rate, the average value of the NOx purification rates, the integrated value of the NOx purification rates or the like is within a permissible range. Further, for example, the predetermined amount can be such a sulfur poisoning amount that the average value of the NOx purification rates during the operation of the internal combustion engine, becomes a required value. The sulfur poisoning recovery control is started when the sulfur poisoning amount is equal to or larger than the predetermined value, while the sulfur poisoning recovery control is terminated when the sulfur poisoning amount is equal to or smaller than the threshold value. However, the sulfur poisoning recovery control is not started unless the sulfur poisoning amount is equal to or larger than the predetermined value and the predetermined sulfur poisoning recovery condition is satisfied. The predetermined sulfur poisoning recovery condition is the condition that is different from the sulfur poisoning amount, and the condition is required in order to perform the sulfur poisoning recovery control. For example, a high temperature of the NOx storage reduction catalyst can be used as the predetermined sulfur poisoning recovery condition.

Further, the control unit may determine the threshold value so that an average value of NOx purification rates of the NOx storage reduction catalyst during a period where the amount of the sulfur component stored in the NOx storage reduction catalyst arrives at the amount upon the start of the sulfur poisoning recovery control from the threshold value, becomes a NOx purification rate of the NOx storage reduction catalyst when the amount of the sulfur component stored in the NOx storage reduction catalyst is the predetermined amount.

When the threshold value of the sulfur poisoning amount, at which the sulfur poisoning recovery control is to be terminated, is determined as described above, the average value of the NOx purification rates in conditions where the sulfur poisoning amount is increased/decreased, can be thereby adjusted to the required value. Therefore, it is possible to suppress the sulfur poisoning recovery control from being excessively performed, while suppressing the NOx purification rate from being unnecessarily lowered.

Further, the control unit may subtracts, from the amount of the sulfur component stored in the NOx storage reduction catalyst upon the start of the sulfur poisoning recovery control, a value which is twice a value obtained by subtracting the predetermined amount from the amount of the sulfur component stored in the NOx storage reduction catalyst upon the start of the sulfur poisoning recovery control to provide the threshold value of the sulfur poisoning recovery control.

That is, the sulfur component, which is in the amount that is twice the amount of increase from the predetermined amount, is released by the sulfur poisoning recovery control. This enables the average value of the sulfur poisoning amounts to be adjusted to the predetermined amount. Accordingly, the average NOx purification rate can be adjusted to the required NOx purification rate, and hence it is possible to suppress the sulfur poisoning recovery control from being excessively performed.

Further, the control unit may prohibit the sulfur poisoning recovery control when a fuel amount required for the sulfur poisoning recovery control exceeds a predetermined fuel amount on the assumption that the sulfur poisoning recovery control is performed.

That is, when the deterioration of the fuel efficiency exceeds a permissible range, the sulfur poisoning recovery control is prohibited. Here, when the average speed of the vehicle equipped with the internal combustion engine is low, a large amount of the fuel is required to raise the temperature of the NOx storage reduction catalyst. Therefore, it is feared that the fuel efficiency may be deteriorated. Further, when the release speed of the sulfur component is slow during the sulfur poisoning recovery control, it takes a long time until the sulfur poisoning recovery control is terminated. It is, therefore, feared that the fuel efficiency may be deteriorated. When the deterioration of the fuel efficiency exceeds the permissible range, it is possible to suppress the deterioration of the fuel efficiency by prohibiting the sulfur poisoning recovery control. That is, the predetermined fuel amount is the upper limit value of the permissible range of the amount of increase of the fuel consumption amount brought about by performing the sulfur poisoning recovery control. Note that when the speed of the vehicle is low, the amount of NOx discharged from the internal combustion engine is small. Therefore, even when the sulfur poisoning recovery control is prohibited, it is possible to suppress NOx from flowing out from the NOx storage reduction catalyst. Further, when the NOx purification rate becomes lower than a permissible value, it is also allowable to permit the sulfur poisoning recovery control irrelevant to the amount of the fuel required for the sulfur poisoning recovery control.

Further, the control unit may prohibit the sulfur poisoning recovery control when an amount of NOx flowing out from the NOx storage reduction catalyst during a predetermined period including a period in which the sulfur poisoning recovery control is performed in a supposed case where that the sulfur poisoning recovery control is performed, is larger than an amount of NOx flowing out from the NOx storage reduction catalyst during a period corresponding to the predetermined period in a supposed case where the sulfur poisoning recovery control is not performed.

During the sulfur poisoning recovery control, it is difficult to reduce NOx by means of the NOx storage reduction catalyst, and the amount of NOx discharged from the internal combustion engine is increased as well. Hence, it is feared that NOx may flow out from the NOx storage reduction catalyst during the sulfur poisoning recovery control. Therefore, the amount of NOx, which flows out from the NOx storage reduction catalyst, is decreased as a whole depending on the condition when the sulfur poisoning recovery control is not performed as compared with when the sulfur poisoning recovery control is performed. In such a situation, by prohibiting the sulfur poisoning recovery control, it is possible to reduce the amount of NOx flowing out from the NOx storage reduction catalyst and to suppress the deterioration of the fuel efficiency. The amount of NOx flowing out from the NOx storage reduction catalyst during a predetermined period including a period in which the sulfur poisoning recovery control is performed in a supposed case where the sulfur poisoning recovery control is performed, may be the sum of an outflow amount of NOx flowing out from the NOx storage reduction catalyst during the sulfur poisoning recovery control and an amount of NOx flowing out from the NOx storage reduction catalyst until the next time sulfur poisoning recovery control is performed after the termination of the concerning sulfur poisoning recovery control. That is, the predetermined period may be a period until the next time sulfur poisoning recovery control is performed. Further, the amount of NOx flowing out from the NOx storage reduction catalyst during a period corresponding to the predetermined period in a supposed case where the sulfur poisoning recovery control is not performed, may be an amount of NOx flowing out from the NOx storage reduction catalyst until the next time sulfur poisoning recovery control is performed. A state in this case is one in which the sulfur poisoning amount is relatively large, and therefore the amount is the NOx outflow amount under the condition where the influence of the sulfur poisoning is large. The period corresponding to the predetermined period may be a period until the next time sulfur poisoning recovery control is performed. The predetermined period is the period that is at least longer than the period in which the sulfur poisoning recovery control is performed when assuming that the sulfur poisoning recovery control is performed.

EFFECT OF THE INVENTION

According to the present invention, it is possible to suppress the NOx storage reduction catalyst from being unnecessarily recovered from the sulfur poisoning.

BRIEF DESCRIPTION OF THE DRAWINGS

Fig. 1 shows a schematic arrangement of an intake system and an exhaust system of an internal combustion engine according to an embodiment.

Fig. 2 shows a relationship between the sulfur poisoning amount and the NOx purification rate of an NSR catalyst.

Fig. 3 shows a time chart illustrating the transition of the sulfur poisoning amount and the state of the sulfur poisoning recovery control according to a first embodiment.

Fig. 4 shows a time chart illustrating the transition of the sulfur poisoning amount and the state of the sulfur poisoning recovery control provided when the threshold value, at which the sulfur poisoning recovery control is to be terminated, is a constant value.

Fig. 5 shows a relationship between the conventional average value of the sulfur poisoning amounts and the NOx purification rate of the NSR catalyst.

Fig. 6 shows a flow chart illustrating a flow of the sulfur poisoning recovery control according to the first embodiment.

Fig. 7 shows a relationship between the sulfur poisoning amount and the NOx purification rate of an NSR catalyst according to a second embodiment.

Fig. 8 shows relationships between the value which is obtained by subtracting the S control value from the sulfur poisoning amount at the starting time of the sulfur poisoning recovery control and the value obtained by subtracting the threshold value from the S control value.

Fig. 9 shows a flow chart illustrating a flow to judge whether or not the sulfur poisoning recovery control should be performed on the basis of the deterioration of the fuel efficiency.

Fig. 10 shows a flow chart illustrating a flow to judge whether or not the sulfur poisoning recovery control should be performed on the basis of the increase in the NOx outflow amount.

MODE FOR CARRYING OUT THE INVENTION

An explanation will be made in detail below by way of example with reference to the drawings on the basis of embodiments about the mode for carrying out the invention. However, the dimension or size, the material, the shape, the relative arrangement, etc. of each of constitutive parts or components described in the embodiments are not intended to limit the scope of the invention only thereto unless specifically noted.

First Embodiment

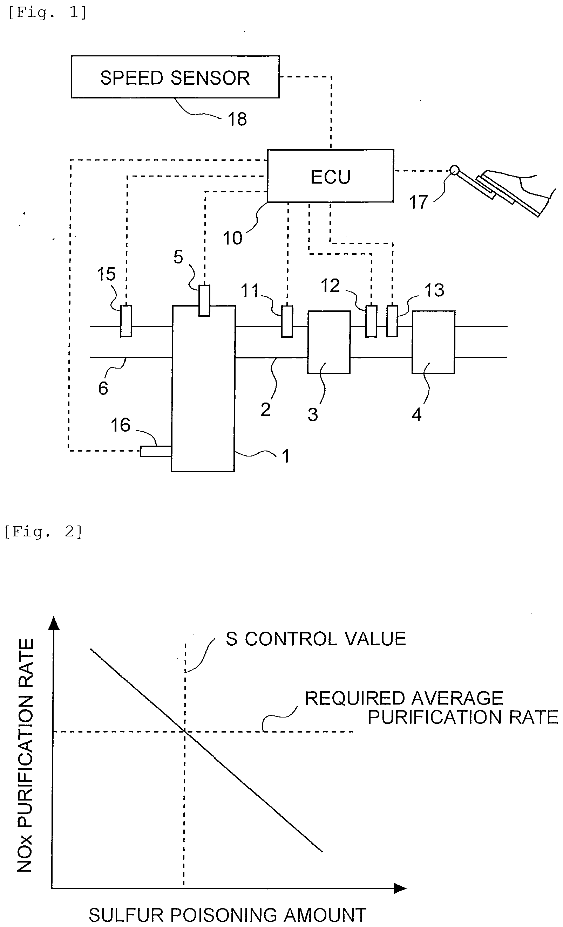

Fig. 1 shows a schematic arrangement of an intake system and an exhaust system of an internal combustion engine 1 according to this embodiment. The internal combustion engine 1 is a diesel engine that is mounted on a vehicle for driving the vehicle. The internal combustion engine 1 may, however, be a gasoline engine. An exhaust gas passage 2 is connected to the internal combustion engine 1. In the exhaust gas passage 2, an NSR catalyst 3 and a filter 4 are sequentially provided from the upstream side. Note that the NSR catalyst 3 may be carried on the filter 4.

The NSR catalyst 3 stores NOx contained in the exhaust gas when the oxygen concentration of the inflowing exhaust gas is high, while the NSR catalyst 3 reduces (deoxidizes) stored NOx when the oxygen concentration of the inflowing exhaust gas is lowered and a reducing agent is present. The term "storing" is used as a term which also includes the temporary adsorption or adhesion of NOx. The filter 4 traps particulate matter (PM) contained in the exhaust gas.

An air-fuel ratio sensor 11, which detects the air-fuel ratio of the exhaust gas, is provided in the exhaust gas passage 2 on the upstream side of the NSR catalyst 3. Further, a temperature sensor 12 detecting the temperature of the exhaust gas and a NOx sensor 13 detecting the NOx concentration in the exhaust gas are provided in the exhaust gas passage 2 at the downstream of the NSR catalyst and at the upstream of the filter 4.

An injection valve 5, which injects the fuel into a cylinder, is provided for each of the cylinders of the internal combustion engine 1.

On the other hand, an intake gas passage 6 is connected to the internal combustion engine 1. An air flow meter 15, which detects the flow rate of the intake gas, is provided in the intake gas passage 6. Further, in the vehicle, a speed sensor 18 detecting the speed of the vehicle is provided.

Moreover, an electronic control unit (ECU) 10 is provided in combination with the internal combustion engine 1. The ECU 10 controls the operational state of the internal combustion engine 1, the exhaust gas purification apparatus and the like. A crank position sensor 16 and an accelerator opening degree sensor 17 are electrically connected to the ECU 10 in addition to the air-fuel ratio sensor 11, the temperature sensor 12, the NOx sensor 13, the air flow meter 15, and the speed sensor 18 described above. Detection values by the respective sensors are transmitted to the ECU 10. Note that in this embodiment, the ECU 10 corresponds to the control unit according to the present invention.

The ECU 10 can grasp the operational state of the internal combustion engine 1, including, for example, the engine rotation speed which is based on the detection by the crank position sensor 16 and the engine load which is based on the detection by the accelerator opening degree sensor 17. In this embodiment, the air-fuel ratio of the exhaust gas flowing into the NSR catalyst 3 can be detected by the air-fuel ratio sensor 11. However, the air-fuel ratio of the exhaust gas can be also estimated on the basis of the intake air amount of the internal combustion engine 1 and the fuel injection amount injected from the injection valve 5. Further, the ECU 10 estimates the temperatures of the NSR catalyst 3 and the filter 4 on the basis of the detection value of the temperature sensor 12. However, in place thereof, the temperatures of the NSR catalyst 3 and the filter 4 can be also estimated on the basis of the operational state of the internal combustion engine 1.

In the meantime, the sulfur component contained in the fuel is accumulated in the NSR catalyst 3. This is referred to as "sulfur poisoning". The ability of the NSR catalyst 3 to purify the exhaust gas is lowered due to the sulfur poisoning. Therefore, the sulfur poisoning recovery control to recover the NSR catalyst 3 from the sulfur poisoning is performed. The sulfur poisoning recovery control is performed by making the temperature of the NSR catalyst 3 to high and making the air-fuel ratio of the exhaust gas equal to or smaller than the theoretical air-fuel ratio. In order to make the temperature of the NSR catalyst 3 to high, for example, the fuel injection timing of the internal combustion engine 1 is delayed, and thereby the unburned fuel is discharged so as to be reacted in the NSR catalyst 3. Note that the temperature of the NSR catalyst 3 may be raised by the reaction of the unburned fuel at an oxidation catalyst provided upstream from the NSR catalyst 3. Further, in order to make the air-fuel ratio of the exhaust gas equal or smaller than the theoretical air-fuel ratio, for example, the target air-fuel ratio of the internal combustion engine 1 is lowered, or the fuel is added into the exhaust gas.

Further, the ECU 10 performs the process to oxidize and remove PM when the amount of PM trapped by the filter 4 (hereinafter referred to as "PM accumulation amount" as well), arrives at a fixed amount. This process is referred to as "regeneration" of the filter 4. In order to oxidize PM trapped by the filter 4, it is necessary that the temperature of the filter 4 is high, and oxygen exists in the filter 4. Also in the regeneration of the filter 4, for example, the fuel injection timing of the internal combustion engine 1 is delayed, and thereby the unburned fuel is discharged so that the unburned fuel is reacted in the NSR catalyst 3. Note that the temperature of the filter 4 may be raised by the reaction of the unburned fuel at an oxidation catalyst provided upstream from the NSR catalyst 3. Further, the temperature of the filter 4 may be raised by discharging the combustion gas at a high temperature from the internal combustion engine 1.

A large amount of the fuel is consumed when the sulfur-poisoning recovery control and the regeneration of the filter 4 are performed. Therefore, when these processes are unnecessarily performed, the deterioration of the fuel efficiency is caused. In this case, when the regeneration of the filter 4 is performed, the temperature of the NSR catalyst 3 is also raised. Therefore, when the sulfur poisoning recovery control is performed during the regeneration of the filter 4 or immediately after the regeneration of the filter 4, it is enough to use a small amount of the fuel which is required to raise the temperature of the NSR catalyst 3. Therefore, in this embodiment, when the sulfur poisoning amount of the NSR catalyst 3 is equal to or larger than the S control value during the regeneration of the filter 4 or immediately after the regeneration of the filter 4, the sulfur poisoning recovery control is started. The S control value is the sulfur poisoning amount corresponding to the required average value of the NOx purification rates. That is, when the sulfur poisoning amount has the same value as that of the S control value, the NOx purification rate has the same value as that of the required average value of the NOx purification rates. An optimum value is previously set for the S control value. Details of the S control value will be described later on. Note that in this embodiment, the S control value corresponds to the predetermined amount according to the present invention.

The ECU 10 terminates the sulfur poisoning recovery control when the sulfur poisoning amount of the NSR catalyst 3 is decreased to the threshold value by the sulfur poisoning recovery control. In this case, it is also considered that the threshold value is a constant value. However, if the sulfur poisoning recovery control is performed for a long period of time when the sulfur poisoning amount of the NSR catalyst 3 is small, then the NOx purification rate thereafter can be raised, but NOx or the like, which flows out during the sulfur poisoning recovery control, is increased. Further, it is also feared that the fuel efficiency may be deteriorated due to the unnecessary performing of the sulfur poisoning recovery control.

In view of the above, when the sulfur poisoning recovery control is performed at (around) the same time with the regeneration of the filter 4, the ECU 10 increases the threshold value of the sulfur poisoning recovery control as the amount of the sulfur component stored in the NOx storage reduction catalyst upon the start of the sulfur poisoning recovery control is smaller. This shortens the period for performing the sulfur poisoning recovery control as the sulfur poisoning amount upon the start of the sulfur poisoning recovery control becomes smaller.

Here, assumption is made that threshold value is a constant value and the sulfur poisoning recovery control is performed until the sulfur poisoning amount becomes the threshold value. In this case, the sulfur poisoning amount at the termination of the sulfur poisoning recovery control is relatively small. Therefore, the average value of the sulfur poisoning amount increased due to the sulfur poisoning and the sulfur poisoning amount decreased by performing the sulfur poisoning recovery control is also decreased. Accordingly, it is feared that the NOx purification rate may be maintained at a purification rate which is higher than the required NOx purification rate. That is, it is feared that the sulfur poisoning recovery control may be unnecessarily performed. Further, it is feared that the fuel efficiency may be deteriorated due to the unnecessary continuation of the sulfur poisoning recovery control, although the NOx purification rate is raised. On the contrary, the control is made such that the smaller the amount of the sulfur component stored in the NSR catalyst 3 upon the start of the sulfur poisoning recovery control is, the larger the threshold value for the sulfur poisoning recovery control at the present point in time is. By doing so, it is possible to improve the fuel efficiency, although the average value of the sulfur poisoning amounts is increased.

Specifically, the threshold value of the sulfur poisoning amount, at which the sulfur poisoning recovery control is to be terminated, may be determined as follows. That is, the threshold value for the sulfur poisoning recovery control at the present point in time may be determined by subtracting the value which is twice the value that is obtained by subtracting the S control value from the sulfur poisoning amount upon the start of the sulfur poisoning recovery control, from the sulfur poisoning amount upon the start of the sulfur poisoning recovery control. This can be also expressed as follows. That is, the value, which is obtained by subtracting the S control value from the sulfur poisoning amount upon the start of the sulfur poisoning recovery control, is subtracted from the S control value to provide the threshold value. When the threshold value is determined as described above, the average value of the sulfur poisoning amount can be the above S control value.

In this context, Fig. 2 shows a relationship between the sulfur poisoning amount and the NOx purification rate of the NSR catalyst 3. Fig. 2 shows a case in which the sulfur poisoning amount and the NOx purification rate of the NSR catalyst 3 are in a linear relation. The larger the sulfur poisoning amount is, the more lowered the NOx purification rate of the NSR catalyst 3 is. The threshold value of the sulfur poisoning amount, at which the sulfur poisoning recovery control is to be terminated, is determined so that the average value of the sulfur poisoning amounts becomes the S control value. This enables the average value of the NOx purification rate to be the required value (required average purification rate shown in Fig. 2). When the threshold value is determined as described above, it is possible to maintain the NOx purification rate to be within a required range.

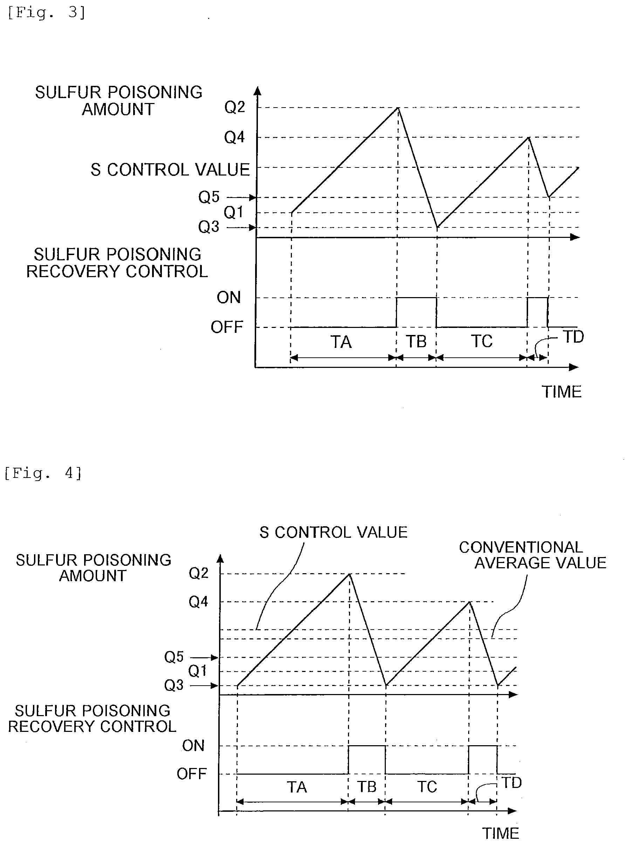

Fig. 3 shows a time chart illustrating the transition of the sulfur poisoning amount and the state of the sulfur poisoning recovery control according to this embodiment. In Fig. 3 and Fig. 4 described later on, ON of "sulfur poisoning recovery control" indicates that the sulfur poisoning recovery control is performed, and OFF of "sulfur poisoning recovery control" indicates that the sulfur poisoning recovery control is not performed. The sulfur poisoning amount is increased during the periods of TA and TC, and the sulfur poisoning recovery control is performed during the periods of TB and TD. Q1 indicates the sulfur poisoning amount at the point in time at which the sulfur poisoning recovery control performed before the period of TA is terminated. The sulfur poisoning recovery control is not performed (sulfur poisoning recovery control = OFF) during the period of TA, and hence the sulfur poisoning amount is gradually increased. Then, the regeneration of the filter 4 is started when the sulfur poisoning amount is Q2. Therefore, the sulfur poisoning recovery control is started synchronously therewith (sulfur poisoning recovery control = ON). The sulfur poisoning recovery control is performed during the period of TB, and hence the sulfur poisoning amount is gradually decreased. The sulfur poisoning amount indicated by Q3 is the threshold value at which the sulfur poisoning recovery control performed during the period of TB is to be terminated. In this procedure, Q3 as the threshold value is determined so that the value, which is obtained by subtracting the S control value from Q2, is equal to the value which is obtained by subtracting Q3 from the S control value.

Further, the sulfur poisoning amount is gradually increased during the period of TC after the termination of the sulfur poisoning recovery control during the period of TB. Then, the regeneration of the filter 4 is started when the sulfur poisoning amount indicated by Q4 is provided, and hence the sulfur poisoning recovery control is started synchronously therewith. The sulfur poisoning recovery control is performed during the period of TD, and the sulfur poisoning amount is gradually decreased. Then, the sulfur poisoning amount indicated by Q5 is the threshold value at which the sulfur poisoning recovery control performed during the period of TD is to be terminated. In this procedure, Q5 as the threshold value is determined so that the value, which is obtained by subtracting the S control value from Q4, is equal to the value which is obtained by subtracting Q5 from the S control value. When the threshold value, at which the sulfur poisoning recovery control is to be terminated, is determined as described above, the average value of the NOx purification rates is thereby the required average purification rate.

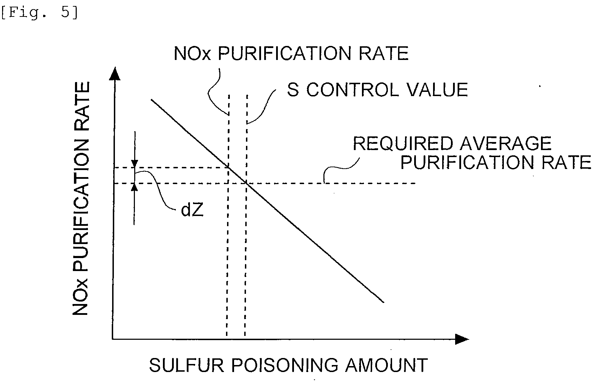

On the other hand, Fig. 4 shows a time chart illustrating the transition of the sulfur poisoning amount and the state of the sulfur poisoning recovery control in a case where the threshold value, at which the sulfur poisoning recovery control is to be terminated, is a constant value. The threshold value, at which the sulfur poisoning recovery control is to be terminated, is constant at Q3. That is, the threshold value, at which the sulfur poisoning recovery control is to be terminated, is Q3 irrelevant to the sulfur poisoning amount provided upon the start of the sulfur poisoning recovery control. The average value of the sulfur poisoning amounts ("conventional average value" shown in Fig. 4) in this case is smaller than the S control value shown in Fig. 3. Accordingly, as shown in Fig. 5, the NOx purification rate, which corresponds to the conventional average value of the sulfur poisoning amounts, is raised by an amount of dZ shown in Fig. 5 as compared with the required average purification rate. In this section, Fig. 5 shows a relationship between the conventional average value of the sulfur poisoning amounts and the NOx purification rate of the NSR catalyst 3. In this way, although the NOx purification rate is raised, the fuel efficiency is deteriorated corresponding to the amount of raise from the required NOx purification rate. That is, the NOx purification rate is excessively raised, and hence the fuel efficiency is unnecessarily deteriorated. On the contrary, in this embodiment, it is possible to shorten the poisoning recovery time (time required for recovery from the poisoning) while maintaining the NOx purification rate to be the required NOx purification rate. Accordingly, it is possible to suppress the deterioration of the fuel efficiency.

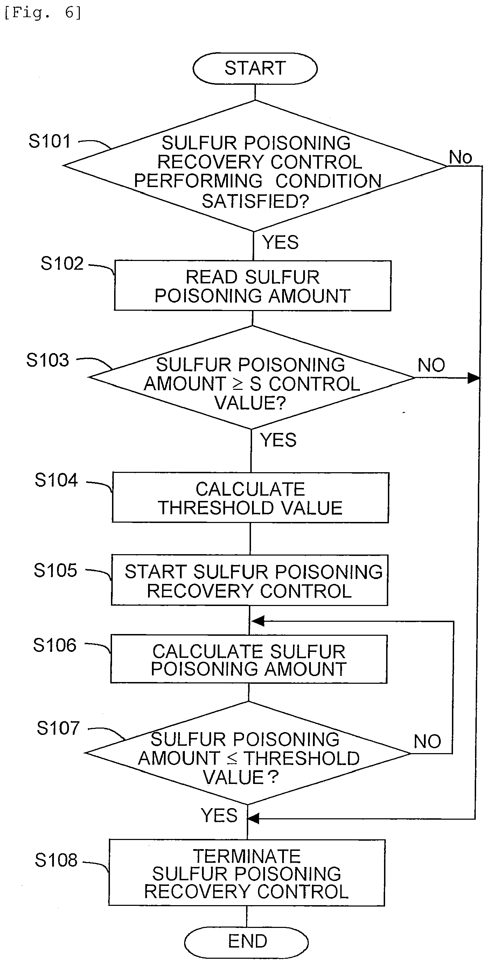

Fig. 6 shows a flow chart illustrating a flow of the sulfur poisoning recovery control according to this embodiment. This flow chart is executed by the ECU 10 every time when a predetermined time elapses.

In a step S101, it is judged whether or not the sulfur poisoning recovery control performing condition is satisfied. The sulfur poisoning recovery control performing condition, which is referred to herein, is the condition that is required to perform the sulfur poisoning recovery control, and the condition is different from the sulfur poisoning amount of the NSR catalyst 3. For example, it is judged that the sulfur poisoning recovery control performing condition is satisfied when the regeneration of the filter 4 is in progress or immediately after performing the regeneration of the filter 4. Further, it is also allowable to judge that the sulfur poisoning recovery control performing condition is satisfied when the temperature of the NSR catalyst 3 is sufficiently high (for example, when the temperature of the NSR catalyst 3 is equal to or larger than a predetermined temperature). Note that in this embodiment, the sulfur poisoning recovery control performing condition of step S101 corresponds to the predetermined sulfur poisoning recovery condition according to the present invention.

When the affirmative judgment is made in the step S101, the routine proceeds to a step S102. On the other hand, when the negative judgment is made, this flow chart is terminated.

In the step S102, the sulfur poisoning amount of the NSR catalyst 3 is read. The sulfur poisoning amount can be calculated in accordance with any well-known technique. For example, the amount of the sulfur component, which flows out per unit time from the internal combustion engine 1, is relevant to the concentration of the sulfur component contained in the fuel and the operational state of the internal combustion engine 1 (it is also allowable to use the engine rotation speed and the engine load). It is possible to previously know the concentration of the sulfur component contained in the fuel. Therefore, it is possible to determine the amount of the sulfur component discharged from the internal combustion engine 1 on the basis of the engine rotation speed and the engine load. Further, it is assumed that a predetermined ratio of the sulfur component discharged from the internal combustion engine 1 is occluded in the NSR catalyst 3. The sulfur poisoning amount can be calculated by integrating the amounts of the occluded sulfur component. The ECU 10 always performs the calculation of the sulfur poisoning amount of the NSR catalyst 3 as described above irrelevant to whether or not this flow chart is performed. When the process of the step S102 is completed, the routine proceeds to a step S103.

In the step S103, it is judged whether or not the sulfur poisoning amount is equal to or larger than the S control value. When the sulfur poisoning amount is smaller than the S control value, the sulfur poisoning recovery control is not performed. The S control value, which is referred to herein, is the S control value shown in Fig. 2. When the affirmative judgment is made in the step S103, the routine proceeds to a step S104. On the other hand, when the negative judgment is made, this flow chart is terminated.

In the step S104, the threshold value of the sulfur poisoning amount, at which the sulfur poisoning recovery control is to be terminated, is calculated. The threshold value is calculated such that the value, which is twice the value that is obtained by subtracting the S control value from the sulfur poisoning amount calculated in step S102, is subtracted from the sulfur poisoning amount calculated in step S102. When the process of the step S104 is completed, the routine proceeds to a step S105.

In the step S105, the sulfur poisoning recovery control is started. That is, the temperature of the NSR catalyst 3 is raised, and the air-fuel ratio of the exhaust gas allowed to pass through the NSR catalyst 3 is made to be the rich air-fuel ratio. When the process of the step S105 is completed, the routine proceeds to a step S106.

In the step S106, the sulfur poisoning amount of the NSR catalyst 3 is calculated. In this step, the sulfur poisoning amount is calculated for the NSR catalyst 3 during the sulfur poisoning recovery control. In this procedure, when the sulfur poisoning recovery control is performed, the sulfur poisoning amount is decreased thereby. The amount of decrease of the sulfur poisoning amount is relevant to the temperature of the NSR catalyst 3 and the flow rate of the exhaust gas. Therefore, the amount of decrease of the sulfur poisoning amount can be calculated on the basis of the values thereof. The calculation can be performed by using any well-known technique. Alternatively, the relationship between the time of the execution of the sulfur poisoning recovery control and the amount of decrease of the sulfur poisoning amount may be previously determined, for example, by means of any experiment or any simulation, and the amount of decrease of the sulfur poisoning amount can be also calculated in accordance with the relationship. When the process of the step S106 is completed, the routine proceeds to a step S107.

In the step S107, it is judged whether or not the sulfur poisoning amount is not more than the threshold value. In this step, it is judged whether or not the condition, under which the sulfur poisoning recovery control is to be completed, is satisfied. If the affirmative judgment is made in the step S107, then the routine proceeds to a step S108, and the sulfur poisoning recovery control is terminated. After that, this flow chart is terminated. On the other hand, when the negative judgment is made in the step S107, the routine returns to the step S106. That is, the sulfur poisoning recovery control is performed until the sulfur poisoning amount becomes smaller than the threshold value during the sulfur poisoning recovery control.

As explained above, according to this embodiment, the sulfur poisoning recovery control is performed so that the average value of the sulfur poisoning amounts becomes equal to the S control value. It is therefore possible to shorten the period for performing the sulfur poisoning recovery control, while maintaining the average value of the NOx purification rates at the required value. Accordingly, it is possible to decrease the NOx amount discharged from the internal combustion engine 1 during the sulfur poisoning recovery control. Further, the excessive execution of the sulfur poisoning recovery control can be suppressed to suppress the deterioration of the fuel efficiency.

Second Embodiment

In the first embodiment, as shown in Fig. 2, it is speculated that the relationship between the sulfur poisoning amount and the NOx purification rate is linear to determine the threshold value of the sulfur poisoning amount at which the sulfur poisoning recovery control is to be terminated. However, it is also conceived that the relationship between the sulfur poisoning amount and the NOx purification rate is nonlinear. In view of the above, in this embodiment, an explanation will be made about a case in which the relationship between the sulfur poisoning amount and the NOx purification rate is nonlinear. Note that even when the relationship between the sulfur poisoning amount and the NOx purification rate is linear in the same manner as in the first embodiment, the threshold value can be determined in this embodiment.

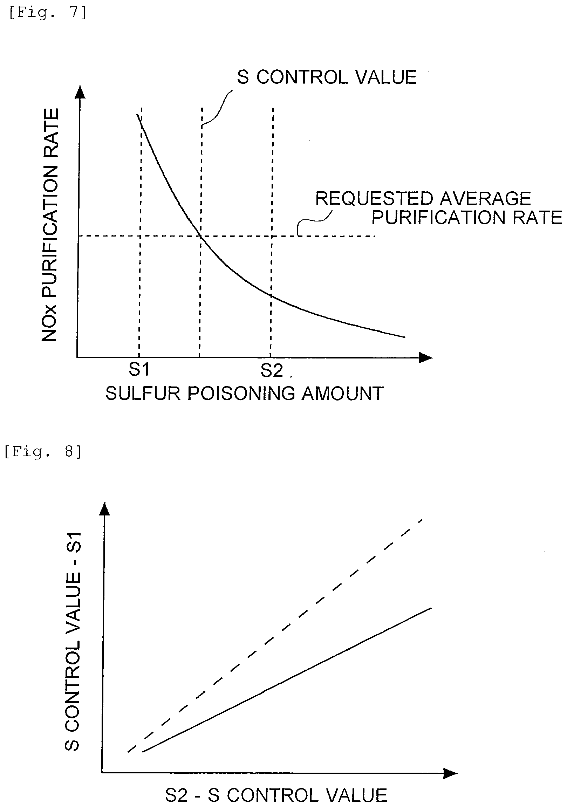

Fig. 7 shows a relationship between the sulfur poisoning amount and the NOx purification rate of an NSR catalyst 3 according to this embodiment. The larger the sulfur poisoning amount is, the more lowered the NOx purification rate of the NSR catalyst 3 is. Further, the larger the sulfur poisoning amount is, the more lowered the ratio of the amount of decrease of the NOx purification rate with respect to the amount of increase of the sulfur poisoning amount is. Then, also in this embodiment, the threshold value of the sulfur poisoning amount, at which the sulfur poisoning recovery control is to be terminated, is determined so that the average value of the NOx purification rates is the required average purification rate.

With reference to Fig. 7, S2 represents the sulfur poisoning amount at the point in time at which the sulfur poisoning recovery control is to be started, and S1 represents the sulfur poisoning amount at which the sulfur poisoning recovery control is to be completed, i.e., the threshold value. The threshold value S1 is determined as the value which fulfills the relationship of the following expression (1).

$$\frac{\int_{S1}^{S2} \text{NOx purification rate} \cdot \Delta S}{S2 - S1} = \text{Required average purification rate} \quad \text{... Expression (1)}$$

Note that the NOx purification rate is determined depending on the sulfur poisoning amount as shown in Fig. 7. In the expression (1), S represents the sulfur poisoning amount. When S1, which fulfills the relationship as described above, is used as the threshold value to terminate the sulfur poisoning recovery control, the average value of the NOx purification rates is thereby the required average purification rate. In this case, the S control value is not utilized when the threshold value is calculated.

Note that in this embodiment, the threshold value, at which the sulfur poisoning recovery control is to be terminated, can be previously determined and mapped as well. Here, Fig. 8 shows relationships between the value which is obtained by subtracting the S control value from the sulfur poisoning amount S2 upon the start of the sulfur poisoning recovery control and the value which is obtained by subtracting the threshold value S1 from the S control value. The solid line indicates the relationship according to this embodiment, and the broken line indicates the relationship according to the first embodiment. In a case in which the larger the sulfur poisoning amount is, the lower the ratio of the amount of decrease of the NOx purification rate with respect to the amount of increase of the sulfur poisoning amount is as shown in Fig. 7, the value, which is obtained by subtracting the threshold value S1 from the S control value, is smaller than the value which is obtained by subtracting the S control value from the sulfur poisoning amount S2 provided at the point in time of the start of the sulfur poisoning recovery control as shown in Fig. 8. When this relationship is mapped and stored in the ECU 10, it is possible to quickly determine the threshold value S1 from the map and the sulfur poisoning amount upon the start of the sulfur poisoning recovery control. Note that in this embodiment, the consideration can be made in the same manner as described above in relation to any other relationship in which the relationship between the sulfur poisoning amount and the NOx purification rate is nonlinear, without being limited to the relationship shown in Fig. 7.

As explained above, according to this embodiment, even when the relationship between the sulfur poisoning amount and the NOx purification rate is nonlinear, it is possible to shorten the period in which the sulfur poisoning recovery control is performed, while maintaining the average value of the NOx purification rates at the required value.

Therefore, it is possible to decrease the NOx amount discharged from the internal combustion engine 1 during the sulfur poisoning recovery control. Further, the excessive execution of the sulfur poisoning recovery control can be suppressed to suppress the deterioration of the fuel efficiency. Note that the threshold value may be determined as explained in this embodiment, when it is unclear whether the relationship between the sulfur poisoning amount and the NOx purification rate is linear or nonlinear.

Third Embodiment

In this embodiment, the sulfur poisoning recovery control is prohibited when it is estimated that the fuel consumption amount becomes excessively large by performing the sulfur poisoning recovery control. Further, the NOx outflow amount provided when the sulfur poisoning recovery control is performed and the NOx outflow amount provided when the sulfur poisoning recovery control is not performed are estimated respectively. When the NOx outflow amount provided when the sulfur poisoning recovery control is performed is larger than the NOx outflow amount provided when the sulfur poisoning recovery control is not performed, the sulfur poisoning recovery control is prohibited. Other devices or the like are the same as those of the first embodiment, any explanation of which is omitted.

When the vehicle speed is low, the temperature of the NSR catalyst 3 becomes low, and hence the period, in which the sulfur poisoning recovery control is performed, is prolonged. Therefore, the fuel consumption amount is increased. In this embodiment, when the fuel consumption amount is increased, the sulfur poisoning recovery control is prohibited to suppress the deterioration of the fuel efficiency.

Specifically, the ECU 10 prohibits the sulfur poisoning recovery control when the fuel amount, which is required for the sulfur poisoning recovery control, is larger than a predetermined fuel amount. The predetermined fuel amount is an upper limit value of a permissible range of the amount of increase of the consumption amount of the fuel consumed by performing the sulfur poisoning recovery control. That is, in this embodiment, the sulfur poisoning recovery control is prohibited when the amount of increase of the fuel consumption amount, which is provided when the comparison is made with a case in which the sulfur poisoning recovery control is not performed, is larger than the permissible range, when the sulfur poisoning recovery control is performed. This can be also expressed such that the sulfur poisoning recovery control is prohibited when it is judged that the vehicle speed is not suitable for the sulfur poisoning recovery control. The ECU 10 calculates the time required for the sulfur poisoning recovery control (hereinafter referred to as "poisoning recovery time" as well), and the ECU 10 calculates the amount of increase of the fuel consumption amount on the basis of the poisoning recovery time.

In this context, the average vehicle speed, the sulfur poisoning amount, and the poisoning recovery time are relevant to one another. Therefore, the ECU 10 calculates the poisoning recovery time on the basis of the average vehicle speed and the sulfur poisoning amount. The relationship thereamong can be previously determined and mapped in accordance with, for example, any experiment or any simulation. The slower the average vehicle speed is, the longer the poisoning recovery time is. Otherwise, the larger the sulfur poisoning amount is, the longer the poisoning recovery time is. The average vehicle speed is an average vehicle speed during a certain past period.

The poisoning recovery time is converted into the amount of increase of the fuel consumption amount. The longer the poisoning recovery time is, the larger the amount of increase of the fuel consumption amount is. The amount of increase per unit time of the fuel consumption amount during the sulfur poisoning recovery control is directly proportional to the specific heat of the NSR catalyst 3, the amount of the exhaust gas, and the difference between the target temperature and the actual exhaust gas temperature, and it is inversely proportional to the amount of generation of heat of the fuel. Therefore, the amount of increase per unit time of the fuel consumption amount during the sulfur poisoning recovery control can be calculated on the basis of the following expression (2).

$$\text{Amount of increase per unit time of fuel consumption}$$
$$\text{amount} = \text{Specific heat} \times \text{Gas amount} \times (\text{Target temperature} -$$
$$\text{Intake gas temperature}) / \text{Amount of generation of heat}$$
$$\dots \text{Expression (2)}$$

The poisoning recovery time can be converted into the amount of increase of the fuel consumption amount by multiplying the fuel consumption amount per unit time of the fuel consumption amount determined by the expression (2) by the poisoning recovery time. Note that the relationship between the poisoning recovery time and the amount of increase of the fuel consumption amount may be previously determined and mapped in accordance with, for example, any experiment or any simulation.

Note that the amount of the sulfur component released per unit time from the NSR catalyst 3 (hereinafter referred to as "sulfur release speed" as well) is also relevant to the poisoning recovery time. Therefore, the poisoning recovery time can be also calculated on the basis of the sulfur release speed. The sulfur release speed is relevant to the temperature of the NSR catalyst 3 and the frequency to provide the rich air-fuel ratio (it is also allowable to use the interval to provide the rich air-fuel ratio). The lower the sulfur release speed is, the longer the period for carrying out the sulfur poisoning recovery control is. Therefore, the fuel consumption amount is increased in accordance therewith. The ECU 10 calculates the poisoning recovery time on the basis of the temperature of the NSR catalyst 3, the frequency to provide the rich air-fuel ratio, and the sulfur poisoning amount. The relationship thereamong can be previously determined and mapped in accordance with, for example, any experiment or any simulation.

The lower the temperature of the NSR catalyst 3 is, the longer the poisoning recovery time is. Otherwise, the lower the frequency to provide the rich air-fuel ratio is, the longer the poisoning recovery time is. Further, the larger the sulfur poisoning amount is, the longer the poisoning recovery time is. The temperature of the NSR catalyst 3, which is referred to herein, is calculated by estimating the degree of increase in the temperature when the sulfur poisoning recovery control is performed. This can be previously determined in accordance with, for example, any experiment or any simulation. Further, the frequency to provide the rich air-fuel ratio is calculated by estimating at what degree of the frequency the rich air-fuel ratio can be provided, when the rich air-fuel ratio is provided in the traveling state at the present point in time. This can be also previously determined in accordance with, for example, any experiment or any simulation. Note that the relationship thereamong may be previously determined and mapped. Then, the poisoning recovery time is converted into the amount of increase of the fuel consumption amount in the same manner as described above.

In this way, when the amount of increase of the fuel consumption amount, which is calculated on the basis of the average vehicle speed or the sulfur release speed, is larger than the predetermined fuel amount, the sulfur poisoning recovery control is prohibited. On the other hand, when the amount of increase of the fuel consumption amount is not more than the predetermined fuel amount, the sulfur poisoning recovery control is permitted.

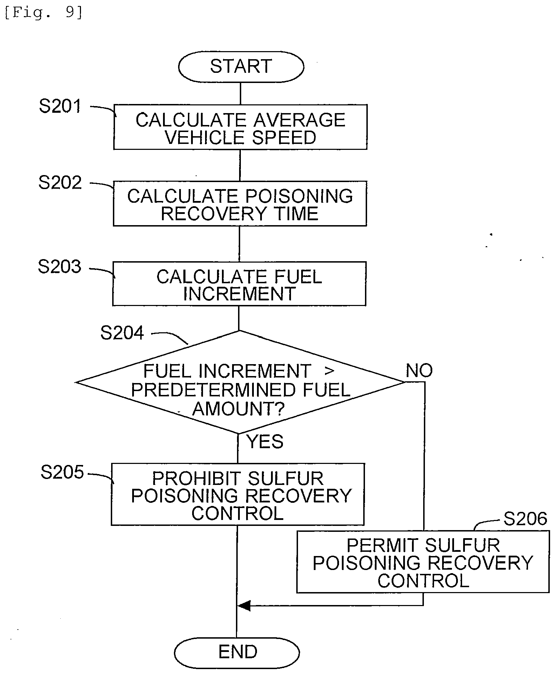

Fig. 9 shows a flow chart illustrating a flow to judge whether or not the sulfur poisoning recovery control is performed on the basis of the deterioration of the fuel efficiency. This flow chart is executed by the ECU 10 every time when a predetermined time elapses. Note that the flow chart shown in Fig. 9 may be executed prior to the execution of the flow chart shown in Fig. 6.

In a step S201, the average speed (average vehicle speed) of the vehicle on which the internal combustion engine 1 is equipped is calculated. The average vehicle speed is the average vehicle speed during a predetermined past period. The ECU 10 calculates the average value of the vehicle speeds detected by the speed sensor 18 during the past predetermined period. When the process of step S201 is completed, the routine proceeds to a step S202.

In the step S202, the poisoning recovery time is calculated on the assumption that the sulfur poisoning recovery control is performed. The time is relevant to the average vehicle speed and the sulfur poisoning amount. The relationship among the average vehicle speed, the sulfur poisoning amount, and the poisoning recovery time is previously determined and mapped in accordance with, for example, any experiment or any simulation, and the relationship is stored beforehand in the ECU 10. Then, in this step, the poisoning recovery time is calculated by using the average vehicle speed, the sulfur poisoning amount, and the map. The sulfur poisoning amount can be calculated in the same manner as in the step S102. When the process of the step S202 is completed, the routine proceeds to a step S203.

In the step S203, when it is assumed that the sulfur poisoning recovery control is performed, the fuel amount (amount of increase of the fuel), which is to be increased in order to make the recovery from the sulfur poisoning, is calculated. The amount of increase of the fuel is the fuel amount which is required to make the recovery from the sulfur poisoning, and the amount of increase of the fuel is the fuel amount which is used in order to raise the temperature of the NSR catalyst 3 during the sulfur poisoning recovery control. The amount of increase of the fuel can be determined by multiplying the poisoning recovery time calculated in the step S202 by the amount of increase per unit time of the fuel consumption amount calculated in accordance with the expression (2) described above. Note that it is also allowable to obtain the amount of increase of the fuel by means of any other method. When the process of the step S203 is completed, the routine proceeds to a step S204.

In the step S204, it is judged whether or not the amount of increase of the fuel, which is calculated in the step S203, is larger than a predetermined fuel amount. The predetermined fuel amount is an upper limit value of a permissible range of the amount of increase of the fuel. When the affirmative judgment is made in the step S204, the routine proceeds to a step S205, and then the sulfur poisoning recovery control is prohibited. After that, this flow chart is terminated. In this case, in the step S101 of the flow chart shown in Fig. 6, it is judged that the sulfur poisoning recovery control performing condition is not satisfied. On the other hand, when the negative judgment is made in the step S204, the routine proceeds to a step S206 and the sulfur poisoning recovery control is permitted. After that, this flow chart is terminated. Note that in this embodiment, when the sulfur poisoning recovery control is prohibited, the NOx purification rate may be lowered. However, in this situation, the average vehicle speed is low, and hence the amount of NOx discharged from the internal combustion engine 1 is small. Therefore, no problem arises.

Further, in this embodiment, it is judged whether or not the sulfur poisoning recovery control is permitted by comparing the NOx outflow amount provided when the sulfur poisoning recovery control is performed with the NOx outflow amount in the case where the sulfur poisoning recovery control is not performed.

In this context, the NOx amount produced by the internal combustion engine 1 is increased in some cases and the reduction of NOx by the NSR catalyst 3 becomes difficult in other cases during the execution of the sulfur poisoning recovery control. Therefore, the NOx outflow amount from the NSR catalyst 3 may be increased. Therefore, although the NOx outflow amount from the NSR catalyst 3 is decreased after the execution of the sulfur poisoning recovery control, the amount of increase of the NOx outflow amount provided during the execution of the sulfur poisoning recovery control may be larger than the amount of decrease of the NOx outflow amount, depending on the condition under which the sulfur poisoning recovery control is performed. In this case, the NOx outflow amount can be rather decreased or reduced as a whole when the sulfur poisoning recovery control is performed after the sulfur poisoning amount is increased to some extent, without performing the sulfur poisoning recovery control at the present point in time. In this embodiment, the NOx outflow amounts are estimated for the case in which the sulfur poisoning recovery control is performed and the case in which the sulfur poisoning recovery control is not performed, respectively, and it is judged whether or not the sulfur poisoning recovery control is performed on the basis of the obtained values.

The NOx outflow amount in the case where the sulfur poisoning recovery control is performed, is the sum of the NOx outflow amount from the NSR catalyst 3 during the sulfur poisoning recovery control and the NOx outflow amount from the NSR catalyst 3 until the next time sulfur poisoning recovery control is performed after the termination of the concerning sulfur poisoning recovery control. On the other hand, the NOx outflow amount in the case where the sulfur poisoning recovery control is not performed is the NOx outflow amount from the NSR catalyst 3 until the next time sulfur poisoning recovery control is performed from the present point in time. Note that the NOx outflow amount in the case where the sulfur poisoning recovery control is performed and the NOx outflow amount in the case where the sulfur poisoning recovery control is not performed may be calculated as the NOx outflow amounts in the same constant period.

The NOx outflow amount from the NSR catalyst 3 during the sulfur poisoning recovery control can be determined by multiplying the NOx outflow amount per unit time by the poisoning recovery time described above. In this case, it is difficult to reduce NOx by the NSR catalyst 3 during the sulfur poisoning recovery control. Therefore, the NOx outflow amount per unit time can be the NOx amount discharged from the internal combustion engine 1. The NOx amount discharged from the internal combustion engine 1 depends on the operational state of the internal combustion engine 1. Therefore, the NOx outflow amount per unit time can be calculated, for example, on the basis of the operational state of the internal combustion engine 1 on the assumption that the sulfur poisoning recovery control is performed. The relationship between the operational state of the internal combustion engine 1 and the NOx outflow amount per unit time can be previously determined, for example, in accordance with any experiment or any simulation. Further, the average vehicle speed or the sulfur release speed can be determined as described above. During the sulfur poisoning recovery control, the NOx amount discharged from the internal combustion engine 1 is increased in some cases on account of the decrease or reduction of the EGR gas amount and/or it is difficult to reduce NOx by the NSR catalyst 3 in other cases. Therefore, the NOx outflow amount from the NSR catalyst 3 is relatively large.

Further, the NOx outflow amount until the next time sulfur poisoning recovery control is performed after the termination of the sulfur poisoning recovery control, is determined by multiplying the NOx outflow amount per unit time after the termination of the sulfur poisoning recovery control by the time required until the sulfur poisoning recovery control is to be performed next time. The NOx outflow amount per unit time after the termination of the sulfur poisoning recovery control is relevant to the sulfur poisoning amount. Therefore, the NOx outflow amount per unit time is calculated on the basis of the sulfur poisoning amount. Note that when the NOx outflow amount per unit time is calculated, the average value is calculated. In this case, the smaller the sulfur poisoning amount is, the higher the NOx purification rate is. Further, the smaller the sulfur poisoning amount is, the smaller the NOx outflow amount from the NSR catalyst 3 is. The relationship between the NOx outflow amount per unit time and the sulfur poisoning amount can be previously determined, for example, in accordance with any experiment or any simulation.

The estimated value of the time required until the sulfur poisoning recovery control is to be performed next time is calculated on the basis of the interval of the past sulfur poisoning recovery control. The average value of the intervals of the sulfur poisoning recovery control performed in the past is used for the interval of the sulfur poisoning recovery control. Alternatively, the interval of the sulfur poisoning recovery control may be calculated, for example, on the basis of the occlusion speed of the sulfur component and/or the regeneration frequency of the filter 4 provided in the past. The time, which is required until the next time sulfur poisoning recovery control is to be performed, can be calculated on the basis of the interval of the sulfur poisoning recovery control. The NOx outflow amount from the NSR catalyst 3 is relatively small until the next time sulfur poisoning recovery control is performed after the termination of the sulfur poisoning recovery control, because the NOx purification rate is relatively high as compared with those in the case where the sulfur poisoning recovery control is not performed and those during the period in which the sulfur poisoning recovery control is performed.

On the other hand, the NOx outflow amount in the case the sulfur poisoning recovery control is not performed, is determined by multiplying the NOx outflow amount per unit time by the time required until the next time sulfur poisoning recovery control is to be performed. The time required until the next time sulfur poisoning recovery control is to be performed and the NOx outflow amount per unit time are calculated in the same manner as described above.

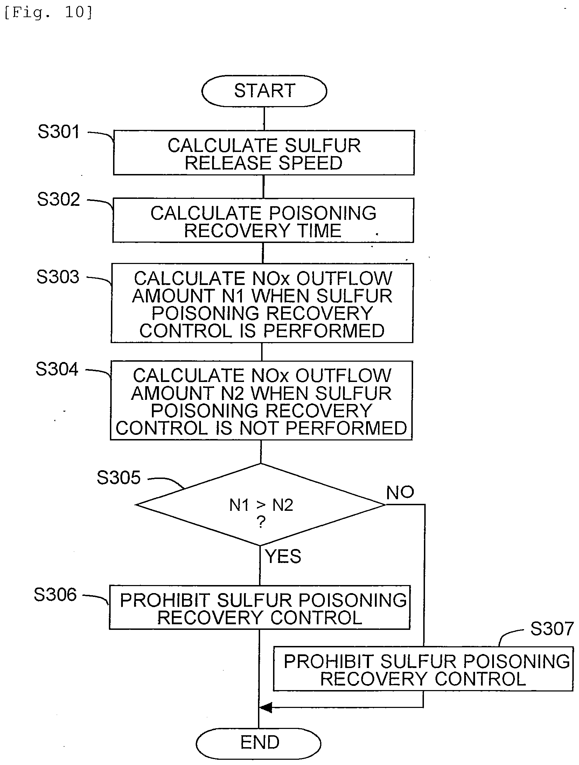

Next, Fig. 10 shows a flow chart illustrating a flow to judge whether or not the sulfur poisoning recovery control is performed on the basis of the increase in the NOx outflow amount. This flow chart is executed by the ECU 10 every time when a predetermined time elapses. Note that the flow chart shown in Fig. 10 may be executed prior to the execution of the flow chart shown in Fig. 6.

In a step S301, the sulfur release speed is calculated on the assumption that the sulfur poisoning recovery control is performed. In this step, the sulfur release speed is determined on the basis of the temperature of the NSR catalyst 3 and the frequency to provide the rich air-fuel ratio. The temperature of the NSR catalyst 3 and the frequency to provide the rich air-fuel ratio as described above can be previously determined, for example, in accordance with any experiment or any simulation. Further, the relationship among the temperature of the NSR catalyst 3, the frequency to provide the rich air-fuel ratio, and the sulfur release speed is also previously determined, for example, in accordance with any experiment or any simulation. When the process of the step S301 is completed, the routine proceeds to a step S302.

In the step S302, the poisoning recovery time is calculated on the assumption that the sulfur poisoning recovery control is performed. The poisoning recovery time is relevant to the sulfur release speed and the sulfur poisoning amount. That is, the sulfur poisoning amount, for which the recovery is to be made, is calculated on the basis of the sulfur poisoning amount and the threshold value for terminating the sulfur poisoning recovery control, and the sulfur poisoning amount, for which the recovery is to be made, is divided by the sulfur release speed. Thus, the poisoning recovery time is calculated. The sulfur poisoning amount and the threshold value for terminating the sulfur poisoning recovery control can be calculated in the same manner as in the first embodiment. When the process of the step S302 is completed, the routine proceeds to a step S303.

In the step S303, the amount of NOx (NOx outflow amount N1), which is flowing out from the NSR catalyst 3 until the next time sulfur poisoning recovery control is performed, is calculated on the assumption that the sulfur poisoning recovery control is performed. The NOx outflow amount N1 is calculated as the sum of the NOx outflow amount during the sulfur poisoning recovery control and the NOx outflow amount until the next time sulfur poisoning recovery control is performed after the termination of the sulfur poisoning recovery control.

The NOx outflow amount during the sulfur poisoning recovery control is determined by multiplying the NOx outflow amount per unit time by the time calculated in the step S302. In this case, it is difficult for the NSR catalyst 3 to reduce NOx during the sulfur poisoning recovery control. Therefore, the NOx outflow amount per unit time can be the NOx amount discharged from the internal combustion engine 1. The NOx amount discharged from the internal combustion engine 1 depends on the operational state of the internal combustion engine 1. Therefore, the NOx outflow amount per unit time can be calculated, for example, on the basis of the operational state of the internal combustion engine 1 on the assumption that the sulfur poisoning recovery control is performed.

Further, the NOx outflow amount until the next time sulfur poisoning recovery control is performed after the termination of the sulfur poisoning recovery control, is determined by multiplying the NOx outflow amount per unit time after the termination of the sulfur poisoning recovery control by the time required until the sulfur poisoning recovery control is to be performed next time. The smaller the sulfur poisoning amount is, the higher the NOx purification rate is. Further, the smaller the sulfur poisoning amount is, the smaller the NOx outflow amount from the NSR catalyst 3 is. The NOx outflow amount per unit time can be previously determined, for example, in accordance with any experiment or any simulation. Further, the time, which is required until the sulfur poisoning recovery control is to be performed next time, is determined on the basis of the average value of the intervals to perform the sulfur poisoning recovery control. When the process of the step S303 is completed, the routine proceeds to a step S304.

In the step S304, the amount of NOx (NOx outflow amount N2), which is flowing out from the NSR catalyst 3 until the next time sulfur poisoning recovery control is performed, is calculated on the assumption that the sulfur poisoning recovery control is not performed. The NOx outflow amount N2 is determined by multiplying the NOx outflow amount from the NSR catalyst 3 per unit time by the time required until the sulfur poisoning recovery control is to be performed next time. When the process of the step S304 is completed, the routine proceeds to a step S305.

In the step S305, it is judged whether or not the NOx outflow amount N1 calculated in the step S303 is larger than the NOx outflow amount N2 calculated in the step S304. In this step, it is judged whether or not the NOx outflow amount is increased as a whole by performing the sulfur poisoning recovery control.

When the affirmative judgment is made in the step S305, the routine proceeds to a step S306 to prohibit the sulfur poisoning recovery control, and then this flow chart is terminated. On the other hand, when the negative judgment is made in the step S305, the routine proceeds to step S307 to permit the sulfur poisoning recovery control, and then this flow chart is terminated.

In this embodiment, with reference to Figs. 9 and 10, the step S201 and the step S202 can be replaced with the step S301 and the step S302. Further, any one of the poisoning recovery times, which is longer and which is selected from the poisoning recovery time calculated in the step S202 and the poisoning recovery time calculated in the step S302, can be also used when the amount of increase of the fuel is calculated in the step S203 or when the NOx outflow amount is calculated in the step S303. Further, at least one of the flow chart shown in Fig. 9 and the flow chart shown in Fig. 10 may be executed, or both of them may be executed. Further, the sulfur poisoning recovery control may be performed only when the sulfur poisoning recovery control is permitted in both of the flow charts of Figs. 9 and 10.

As explained above, according to the embodiment of the present invention, the sulfur poisoning recovery control is prohibited when the fuel efficiency is deteriorated or when the NOx outflow amount is increased. Therefore, it is possible to improve the fuel efficiency, and/or it is possible to reduce the NOx outflow amount.

Description of the Reference Numerals

1:      internal combustion engine
2:      exhaust gas passage
3:      catalyst
4:      filter
5:      injection valve
6:      intake gas passage
10:     ECU
11:     air-fuel ratio sensor
12:     temperature sensor
13:     NOx sensor
15:     air flow meter
16:     crank position sensor
17:     accelerator opening degree sensor
18:     speed sensor

**Claims**

1.  An exhaust gas purification apparatus for an internal combustion engine (1), comprising:

    a NOx storage reduction catalyst (3) which is provided in an exhaust gas passage (2) of the internal combustion engine (1) and which stores NOx; and
    a control unit (10),
    **characterized in that** the control unit (10) is adapted to:

    when an amount of a sulfur component stored in the NOx storage reduction catalyst (3) is equal to or larger than a predetermined amount and a predetermined sulfur poisoning recovery condition is satisfied, determine a threshold value, which is smaller than the predetermined amount, in such a manner that the threshold value becomes larger as the amount of the sulfur component at the time becomes smaller and start sulfur poisoning recovery control; and
    terminate the sulphur poisoning recovery control when an amount of the sulfur component stored in the NOx storage reduction catalyst (3) becomes equal to or smaller than the threshold value.

2.  The exhaust gas purification apparatus for the internal combustion engine (1) according to claim 1, wherein the control unit is adapted to determine the threshold value so that an average value of NOx purification rates of the NOx storage reduction catalyst (3) during a period until the amount of the sulfur component stored in the NOx storage reduction catalyst (3) arrives at the amount upon the start of the sulfur poisoning recovery control from the threshold value, becomes a NOx purification rate of the NOx storage reduction catalyst (3) when the amount of the sulfur component stored in the NOx storage reduction catalyst (3) is the predetermined amount.

3.  The exhaust gas purification apparatus for the internal combustion engine (1) according to claim 1 or 2, wherein the control unit (10) is adapted to subtract, from the amount of the sulfur component stored in the NOx storage reduction catalyst (3) upon the start of the sulfur poisoning recovery control, a value which is twice a value obtained by subtracting the predetermined amount from the amount of the sulfur component stored in the NOx storage reduction catalyst (3) upon the start of the sulfur poisoning recovery control to provide the threshold value.

4. The exhaust gas purification apparatus for the internal combustion engine (1) according to any one of claims 1 to 3, wherein the control unit (10) is adapted to prohibit the sulfur poisoning recovery control when a fuel amount required for the sulfur poisoning recovery control exceeds a predetermined fuel amount on the assumption that the sulfur poisoning recovery control is performed.

5. The exhaust gas purification apparatus for the internal combustion engine according to any one of claims 1 to 4, wherein the control unit (10) is adapted to prohibit the sulfur poisoning recovery control when an amount of NOx flowing out from the NOx storage reduction catalyst (3) during a predetermined period including a period in which the sulfur poisoning recovery control is performed in a supposed case where that the sulfur poisoning recovery control is performed, is larger than an amount of NOx flowing out from the NOx storage reduction catalyst (3) during a period corresponding to the predetermined period in a supposed case where the sulfur poisoning recovery control is not performed.

**Patentansprüche**

1. Abgasreinigungsgerät für einen Verbrennungsmotor (1), das aufweist:

   einen $NO_x$-Speicherreduktionskatalysator (3), der in einem Abgaskanal (2) des Verbrennungsmotors (1) vorgesehen ist und der $NO_x$ speichert, und
   eine Steuereinheit (10),
   **dadurch gekennzeichnet, dass** die Steuereinheit (10) eingerichtet ist, um,
   wenn eine Menge einer Schwefelkomponente, die im $NO_x$-Speicherreduktionskatalysator (3) gespeichert ist, gleich einer vorbestimmten Menge oder größer als diese ist und eine vorbestimmte Schwefelvergiftungsregenierungsbedingung erfüllt ist, einen Schwellwert zu bestimmen, der kleiner als der vorbestimmte Wert ist, auf eine solche Weise, dass der Schwellwert größer ist, wenn die Menge der Schwefelkomponente zu der Zeit kleiner wird, und die Schwefelregenierungsverwertungssteuerung zu starten, und
   die Schwefelregenierungsverwertungssteuerung zu beenden, wenn eine Menge der Schwefelkomponente, die im $NO_x$-Speicherreduktionskatalysator (3) gespeichert ist, gleich dem Schwellwert oder kleiner als dieser wird.

2. Abgasreinigungsgerät für den Verbrennungsmotor (1) nach Anspruch 1, wobei die Steuereinheit eingerichtet ist, um den Schwellwert zu bestimmen, so dass ein durchschnittlicher Wert der $NO_x$-Reinigungsraten des $NO_x$-Speicherreduktionskatalysators (3) während eines Zeitraums, bis dass die Menge der Schwefelkomponente, die im $NO_x$-Speicherreduktionskatalysator (3) gespeichert ist, zu der Menge beim Start der Schwefelvergiftungsregenierungssteuerung von dem Schwellwert gelangt, eine $NO_x$-Reinigungsrate des $NO_x$-Speicherreduktionskatalysators (3) wird, wenn die Menge der Schwefelkomponente, die im $NO_x$-Speicherreduktionskatalysator (3) gespeichert ist, die vorbestimmte Menge ist.

3. Abgasreinigungsgerät für den Verbrennungsmotor (1) nach Anspruch 1 oder 2, wobei die Steuereinheit (10) eingerichtet ist, um von der Menge der Schwefelkomponente, die im $NO_x$-Speicherreduktionskatalysator (3) beim Start der Schwefelvergiftungsregenierungssteuerung gespeichert ist, einen Wert zu subtrahieren, der das Doppelte eines Wertes hat, der erhalten wird, indem die vorbestimmte Menge von der Menge der Schwefelkomponente subtrahiert wird, die im $NO_x$-Speicherreduktionskatalysator (3) beim Start der Schwefelvergiftungsregenierungssteuerung gespeichert ist, um den Schwellwert bereitzustellen.

4. Abgasreinigungsgerät für den Verbrennungsmotor (1) nach einem der Ansprüche 1 bis 3, wobei die Steuereinheit (10) eingerichtet ist, um die Schwefelvergiftungsregenierungssteuerung zu unterbinden, wenn eine für die Schwefelvergiftungsregenierungssteuerung geforderte Kraftstoffmenge eine vorbestimmte Kraftstoffmenge übersteigt, unter der Annahme, dass die Schwefelvergiftungsregenierungssteuerung ausgeführt wird.

5. Abgasreinigungsgerät für den Verbrennungsmotor nach einem der Ansprüche 1 bis 4, wobei die Steuereinheit (10) eingerichtet ist, um die Schwefelvergiftungsregenierungssteuerung zu unterbinden, wenn eine Menge von $NO_x$, die aus dem $NO_x$-Speicherreduktionskatalysator (3) herausströmt, während eines vorbestimmten Zeitraums, der einen Zeitraum aufweist, in dem die Schwefelvergiftungsregenierungssteuerung durchgeführt wird, in einem angenommenen Fall, in dem die Schwefelvergiftungsregenierungssteuerung durchgeführt wird, größer als eine Menge von $NO_x$ ist, die aus dem $NO_x$-Speicherreduktionskatalysator (3) herausströmt, während eines Zeitraums, der dem vorbestimmten Zeitraums entspricht, in einem angenommenen Fall, in dem die Schwefelvergiftungsregenierungssteuerung nicht ausgeführt wird.

**Revendications**

1.  Appareil de purification de gaz d'échappement pour un moteur à combustion interne (1), comprenant :

    un catalyseur de réduction de stockage de NOx (3) qui est fourni dans un passage de gaz d'échappement (2) du moteur à combustion interne (1) et qui stocke NOx, et
    une unité de contrôle (10),
    **caractérisé en ce que** l'unité de contrôle (10) est adaptée pour :

    lorsqu'une quantité d'un constituant de soufre stockée dans le catalyseur de réduction de stockage de NOx (3) est supérieure ou égale à une quantité prédéterminée et qu'une condition de récupération d'empoisonnement au soufre prédéterminée est satisfaite, déterminer une valeur de seuil, laquelle est inférieure à la quantité prédéterminée, de sorte que la valeur de seuil augmente lorsque la quantité du constituant de soufre du moment diminue et démarrer le contrôle de récupération d'empoisonnement au soufre ; et
    terminer le contrôle de récupération d'empoisonnement au soufre lorsqu'une quantité du constituant de soufre stockée dans le catalyseur de réduction de stockage de NOx (3) devient inférieure ou égale à la valeur de seuil.

2.  Appareil de purification de gaz d'échappement pour le moteur à combustion interne (1) selon la revendication 1, dans lequel l'unité de contrôle est adaptée pour déterminer la valeur de seuil de sorte qu'une valeur moyenne des taux de purification de NOx du catalyseur de réduction de stockage de NOx (3) pendant une période jusqu'à ce que la quantité du constituant de soufre stockée dans le catalyseur de réduction de stockage de NOx (3) arrive à la quantité au moment du démarrage du contrôle de récupération d'empoisonnement au soufre à partir de la valeur seuil, devienne un taux de purification de NOx du catalyseur de réduction de stockage de NOx (3) lorsque la quantité du constituant de soufre stockée dans le catalyseur de réduction de stockage de NOx (3) est égale à la quantité prédéterminée.

3.  Appareil de purification de gaz d'échappement pour le moteur à combustion interne (1) selon la revendication 1 ou 2, dans lequel l'unité de contrôle (10) est adaptée pour soustraire, de la quantité du constituant de soufre stockée dans le catalyseur de réduction de stockage de NOx (3) au moment du démarrage du contrôle de récupération d'empoisonnement au soufre, une valeur qui est deux fois une valeur obtenue par soustraction de la quantité prédéterminée de la quantité du constituant de soufre stockée dans le catalyseur de réduction de stockage de NOx (3) au moment du démarrage du contrôle de récupération d'empoisonnement au soufre pour fournir la valeur de seuil.

4.  Appareil de purification de gaz d'échappement pour le moteur à combustion interne (1) selon l'une quelconque des revendications 1 à 3, dans lequel l'unité de contrôle (10) est adaptée pour prohiber le contrôle de récupération d'empoisonnement au soufre lorsqu'une quantité de carburant nécessaire pour que le contrôle de récupération d'empoisonnement au soufre excède une quantité de carburant prédéterminée dans l'hypothèse où le contrôle de récupération d'empoisonnement au soufre est réalisé.

5.  Appareil de purification de gaz d'échappement pour le moteur à combustion interne selon l'une quelconque des revendications 1 à 4, dans lequel l'unité de contrôle (10) est adaptée pour prohiber le contrôle de récupération d'empoisonnement au soufre lorsqu'une quantité de NOx s'écoulant à l'extérieur du catalyseur de réduction de stockage de NOx (3) pendant une période prédéterminée incluant une période pendant laquelle le contrôle de récupération d'empoisonnement au soufre est réalisé dans un cas supposé où le contrôle de récupération d'empoisonnement au soufre est réalisé, est supérieure à une quantité de NOx s'écoulant à l'extérieur du catalyseur de réduction de stockage de NOx (3) pendant une période correspondant à la période prédéterminée dans un cas supposé où le contrôle de récupération d'empoisonnement au soufre n'est pas réalisé.

[Fig. 1]

[Fig. 2]

[Fig. 3]

[Fig. 4]

[Fig. 5]

[Fig. 6]

```
                    ┌──────────┐
                    │  START   │
                    └──────────┘
                         │
                        ╱ ╲
             ┌────────╱     ╲────────┐
 S101 ───────┤ SULFUR POISONING      │ No
             │ RECOVERY CONTROL      ├──────┐
             │ PERFORMING CONDITION  │      │
             │    SATISFIED?         │      │
             └────────╲     ╱────────┘      │
                       ╲   ╱               │
                        YES                │
                         │                 │
          ┌──────────────────────────┐     │
 S102 ────┤     READ SULFUR          │     │
          │   POISONING AMOUNT       │     │
          └──────────────────────────┘     │
                         │                 │
                        ╱ ╲                │
             ┌────────╱     ╲────────┐     │
 S103 ───────┤  SULFUR POISONING     │ NO  │
             │  AMOUNT ≥ S CONTROL   ├─────┤
             │     VALUE?            │     │
             └────────╲     ╱────────┘     │
                       ╲   ╱               │
                        YES                │
                         │                 │
          ┌──────────────────────────┐     │
 S104 ────┤      CALCULATE           │     │
          │   THRESHOLD VALUE        │     │
          └──────────────────────────┘     │
                         │                 │
          ┌──────────────────────────┐     │
 S105 ────┤  START SULFUR POISONING  │     │
          │   RECOVERY CONTROL       │     │
          └──────────────────────────┘     │
                         │                 │
                         ▼                 │
          ┌──────────────────────────┐     │
 S106 ────┤  CALCULATE SULFUR        │◄──┐ │
          │  POISONING AMOUNT        │   │ │
          └──────────────────────────┘   │ │
                         │               │ │
                        ╱ ╲              │ │
             ┌────────╱     ╲────────┐   │ │
 S107 ───────┤  SULFUR POISONING     │ NO│ │
             │  AMOUNT ≤ THRESHOLD   ├───┘ │
             │     VALUE?            │     │
             └────────╲     ╱────────┘     │
                       ╲   ╱               │
                        YES ◄──────────────┘
                         │
          ┌──────────────────────────┐
 S108 ────┤      TERMINATE           │
          │  SULFUR POISONING        │
          │  RECOVERY CONTROL        │
          └──────────────────────────┘
                         │
                    ┌──────────┐
                    │   END    │
                    └──────────┘
```

[Fig. 7]

[Fig. 8]

[Fig. 9]

START

S201 — CALCULATE AVERAGE
VEHICLE SPEED

S202 — CALCULATE POISONING
RECOVERY TIME

S203 — CALCULATE FUEL
INCREMENT

S204 — FUEL INCREMENT >
PREDETERMINED FUEL
AMOUNT?    NO

YES

S205 — PROHIBIT SULFUR
POISONING RECOVERY
CONTROL

S206
PERMIT SULFUR
POISONING RECOVERY
CONTROL

END

[Fig. 10]

```
                    ( START )
                        │
S301 ──┐   ┌────────────────────────────┐
       │   │   CALCULATE SULFUR          │
       └───│   RELEASE SPEED             │
           └────────────────────────────┘
                        │
S302 ──┐   ┌────────────────────────────┐
       │   │   CALCULATE POISONING       │
       └───│   RECOVERY TIME             │
           └────────────────────────────┘
                        │
S303 ──┐   ┌────────────────────────────┐
       │   │   CALCULATE NOx OUTFLOW     │
       │   │   AMOUNT N1 WHEN SULFUR     │
       └───│   POISONING RECOVERY        │
           │   CONTROL IS PERFORMED      │
           └────────────────────────────┘
                        │
S304 ──┐   ┌────────────────────────────┐
       │   │   CALCULATE NOx OUTFLOW     │
       │   │   AMOUNT N2 WHEN SULFUR     │
       └───│   POISONING RECOVERY        │
           │   CONTROL IS NOT PERFORMED  │
           └────────────────────────────┘
                        │
S305 ──┐         ◇                NO
       └──────  N1 > N2  ──────────────┐
                   ?                    │
                        │ YES           │
S306 ──┐   ┌────────────────────┐       │
       └───│ PROHIBIT SULFUR     │      │
           │ POISONING           │      │       ┌─ S307
           │ RECOVERY CONTROL    │      │  ┌────────────────────────┐
           └────────────────────┘       │  │ PROHIBIT SULFUR         │
                        │                └──│ POISONING               │
                        │◄──────────────────│ RECOVERY CONTROL        │
                        │                   └────────────────────────┘
                    ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010127179 A
- JP 2006029249 A
- JP 2000080914 A
- EP 1365130 A
- WO 0151779 A
- GB 2495750 A